# EUROPEAN PATENT APPLICATION

(11) **EP 2 472 663 A1**
(43) Date of publication of application: **04.07.2012**
(21) Application number: 10820238.3
(22) Date of filing: 05.08.2010
(51) Int. Cl.: H01M 10/0562, H01M 4/36, H01M 10/052, H01M 10/0585

(54) **SOLID-ELECTROLYTE BATTERY**

(30) Priority: 02.10.2009 JP 2009230927
(71) Applicant: Sumitomo Electric Industries, Ltd., Chuo-ku Osaka-shi Osaka 541-0041 (JP)
(72) Inventor: KANDA, Ryoko, Itami-shi Hyogo 664-0016 (JP); YOSHIDA, Kentaro, Itami-shi Hyogo 664-0016 (JP); UEMURA, Takashi, Itami-shi Hyogo 664-0016 (JP); OTA, Nobuhiro, Itami-shi Hyogo 664-0016 (JP); OGAWA, Mitsuyasu, Itami-shi Hyogo 664-0016 (JP)
(74) Representative: Setna, Rohan P.
(86) International application number: PCT/JP2010/063290
(87) International publication number: WO 2011/040118

(57) **Abstract**

A solid-electrolyte battery is provided that includes a LiNbO₃ film serving as a buffer layer between a positive-electrode active material and a solid electrolyte and has a sufficiently low electrical resistance. The solid-electrolyte battery includes a positive-electrode layer, a negative-electrode layer, and a solid-electrolyte layer that conducts lithium ions between the electrode layers, wherein a buffer layer that is a LiNbO₃ film is disposed between a positive-electrode active material and a solid electrolyte, and a composition ratio (Li/Nb) of Li to Nb in the LiNbO₃ film satisfies 0.93 ≤ Li/Nb ≤ 0.98. The buffer layer may be disposed between the positive-electrode layer and the solid-electrolyte layer or on the surface of a particle of the positive-electrode active material. The buffer layer may have a thickness of 2 nm to 1 µm.

## Description

### Technical Field

The present invention relates to a solid-electrolyte battery including a positive-electrode layer, a negative-electrode layer, and a solid-electrolyte layer that conducts lithium ions between the electrode layers, in particular, to a solid-electrolyte battery including a buffer layer between a positive-electrode active material and a solid electrolyte.

### Background Art

In recent years, solid-electrolyte batteries including a positive-electrode layer, a negative-electrode layer, and a solid-electrolyte layer that mediates conduction of lithium ions between the two layers have been developed as power supplies for small portable electronic devices such as cellular phones and notebook computers.

Use of a solid-electrolyte layer can overcome disadvantages caused by existing electrolytic solutions composed of organic solvents, for example, safety problems caused by leakage of electrolytic solutions and heat-resistance problems caused by evaporation of organic electrolytic solutions at high temperatures that are higher than the boiling points of the solutions.

However, in such a solid-electrolyte battery, a layer (depletion layer) in which lithium ions are depleted in a region of the solid electrolyte, the region being close to the positive-electrode layer, is formed as a resistive layer and this layer increases the electrical resistance, which is problematic (Non Patent Literature 1).

To overcome this problem, the inventors of the present invention disclosed that, by forming a buffer layer composed of a lithium-ion-conductive oxide such as LiNbO₃ between the positive-electrode layer and the solid-electrolyte layer, the formation of the resistive layer is suppressed to decrease the electrical resistance (Japanese Patent Application No. 2007-235885).

Another method of suppressing the formation of the resistive layer has been proposed in which a buffer layer composed of a lithium-ion-conductive oxide such as LiNbO₃ is formed such that the buffer layer covers the surface of a positive-electrode active material and the positive-electrode active material is not in contact with the solid electrolyte (Patent Literature 1).

### Citation List

### Non Patent Literature

NPL 1: Advanced Materials 2006. 18, 2226-2229

### Patent Literature

PTL 1: Domestic Re-publication of PCT International Publication for Patent Application No. W02007/004590

### Summary of Invention

### Technical Problem

However, even in such solid-electrolyte batteries, the electrical resistance is not sufficiently decreased.

Accordingly, an object of the present invention is to provide a solid-electrolyte battery that includes a LiNbO₃ film serving as a buffer layer between a positive-electrode active material and a solid electrolyte and has a sufficiently low electrical resistance. Solution to Problem

The inventors of the present invention first performed various experiments and studies on the reason why the electrical resistance is not sufficiently decreased in a solid-electrolyte battery including a LiNbO₃ film serving as a buffer layer. As a result, the inventors have found that the Li component of the LiNbO₃ film, which is an amorphous unstable film, partially reacts with the air to form Li₂CO₃; the Li₂CO₃ layer, which does not let electricity pass therethrough, serves as a highly resistive layer; as a result, the effective area contributing to the battery operation decreases and the internal resistance of the battery cannot be sufficiently decreased.

The inventors of the present invention presumed that the Li₂CO₃ layer is formed because the Li content of the LiNbO₃ film is high. The inventors further considered that the LiNbO₃ film is an amorphous film and is stable even when it does not satisfy the stoichiometric ratio; accordingly, when the Li content is decreased, that is, the stoichiometric ratio of Li to Nb (composition ratio Li/Nb) in the LiNbO₃ film is decreased, the formation of the Li₂CO₃ layer can be suppressed. Thus, the inventors further performed experiments in which they varied the composition ratio Li/Nb of the LiNbO₃ film.

As a result, it has been found that the formation of Li₂CO₃ is suppressed in a LiNbO₃ film having a composition ratio Li/Nb of 0.98 or less.

That is, it has been found that the Li₂CO₃ layer is formed in existing techniques because the LiNbO₃ film is formed so as to have a composition ratio Li/Nb of 1.0.

However, it has also been found that, when a LiNbO₃ film has an excessively small composition ratio Li/Nb, specifically, less than 0.93, the Nb content becomes excessively high; the excess Nb forms a Nb oxide layer formed of NbO in the LiNbO₃ film; the Nb oxide layer causes a decrease in the electric conductivity of the formed LiNbO₃ film and serves as a resistive layer.

In summary, the finding has been obtained that, when a LiNbO₃ film has a composition ratio Li/Nb satisfying 0.93 ≤ Li/Nb ≤ 0.98, the formation of a Li₂CO₃ layer and Nb oxide layers that serve as resistive layers can be suppressed and the electrical resistance can be sufficiently decreased.

The present invention is based on the finding and provides
a solid-electrolyte battery including a positive-electrode layer, a negative-electrode layer, and a solid-electrolyte layer that conducts lithium ions between the electrode layers, wherein
a buffer layer that is a LiNbO₃ film is disposed between a positive-electrode active material and a solid electrolyte, and
a composition ratio (Li/Nb) of Li to Nb in the LiNbO₃ film satisfies 0.93 ≤ Li/Nb < 0.98.

As described above, when a LiNbO₃ film has a composition ratio (Li/Nb) of Li to Nb satisfying 0.93 ≤ Li/Nb≤ 0.98, the formation of a Li₂CO₃ layer and Nb oxide layers that serve as resistive layers can be suppressed. Accordingly, in a solid-electrolyte battery having such a buffer layer, the effective area contributing to the battery operation does not decrease. Thus, solid-electrolyte batteries whose electrical resistance (internal resistance) is sufficiently decreased can be stably provided.

The positive-electrode layer of such a solid-electrolyte battery may be a thin-film layer formed by vapor deposition or a compacted-powder layer formed by compacting powder.

In the former case of the thin-film layer, the buffer layer is formed as an intermediate layer between the positive-electrode layer and the solid-electrolyte layer.
The buffer layer thus inhibits the contact between the positive-electrode layer and the solid-electrolyte layer, that is, the contact between the positive-electrode active material of the positive-electrode layer and the solid electrolyte, to thereby suppress the formation of resistive layers.

In the latter case of the compacted-powder layer, because the interface resistance between the particles is generally high and the positive-electrode active material alone does not provide sufficiently high ion conductivity, a powder mixture prepared by mixing a positive-electrode active-material powder and a solid-electrolyte powder is used as a raw material powder. For this reason, the buffer layers are formed on the surfaces of the particles of the positive-electrode active-material powder. As a result, the contact between the positive-electrode active-material powder and the solid-electrolyte powder is inhibited and the formation of resistive layers is suppressed.

As described above, the present invention may be applied to the case of the thin-film layer and the case of the compacted-powder layer. In both of the cases, a buffer layer that is a iNbO₃ film is disposed between a positive-electrode active material and a solid electrolyte to inhibit the contact between the positive-electrode active material and the solid electrolyte and to suppress the formation of resistive layers.

In summary, in the solid-electrolyte battery,
the buffer layer may be disposed between the positive-electrode layer and the solid-electrolyte layer.

Alternatively, in the solid-electrolyte battery,
the buffer layer may be disposed on a surface of a particle of the positive-electrode active material.

The buffer layer may be formed by a vapor-phase method such as a laser ablation method or a sputtering method or by a liquid-phase method such as a sol-gel method. The composition ratio of Li to Nb is controlled in the vapor-phase method by controlling the composition of the target. The composition ratio of Li to Nb is controlled in the liquid-phase method by controlling the composition of the solution.

The inventors of the present invention further performed experiments and studies on a preferred thickness of the LiNbO₃ film obtained above that has a composition ratio Li/Nb satisfying 0.93 ≤ Li/Nb ≤ 0.98 in the case of using the LiNbO₃ film as a buffer layer between a solid electrolyte and a positive-electrode active material. As a result, the inventors have reached a conclusion that a buffer layer having a thickness of less than 2 nm does not sufficiently exhibit its function, whereas a buffer layer having a thickness of more than 1 µm results in a battery having a large thickness, which is not preferable; accordingly, a thickness of 2 nm to 1 µm is preferable.

In summary, in the solid-electrolyte battery,
the buffer layer may have a thickness of 2 nm to 1 µm.

When the buffer layer is formed so as to have a thickness of 2 nm to 1 µm, the buffer layer can sufficiently exhibit its function and a solid-electrolyte battery having a small thickness can be provided.

### Advantageous Effects of Invention

According to the present invention, a solid-electrolyte battery can be provided that includes a LiNbO₃ film serving as a buffer layer between a solid electrolyte and a positive-electrode active material and has a sufficiently low electrical resistance.

### Brief Description of Drawings

[Fig. 1] Figure 1 is a schematic view illustrating the sectional configuration of a solid-electrolyte battery according to an embodiment of the present invention.
[Fig. 2] Figure 2 is a schematic view illustrating the sectional configuration of a solid-electrolyte battery according to another embodiment of the present invention. Description of Embodiments

Hereinafter, the present invention will be described with reference to embodiments. However, the present invention is not limited to the embodiments below. Various modifications can be made to the following embodiments within the scope identical to the present invention and the scope of its equivalence.

### EXAMPLES

### [1] Examples in which buffer layer is formed between positive-electrode layer and solid-electrolyte layer

Examples in which an intermediate layer serving as a buffer layer is formed between a positive-electrode layer and a solid-electrolyte layer will be first described.

### (Examples 1 to 3)

### 1. Production of solid-electrolyte batteries

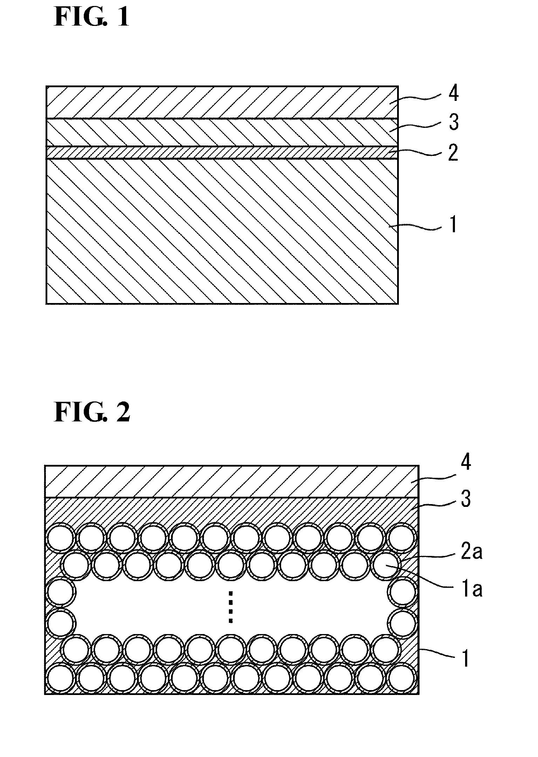

Solid-electrolyte batteries illustrated in Fig. 1 were produced by a procedure described below. Figure 1 is a schematic view illustrating the sectional configuration of a solid-electrolyte battery according to an embodiment of the present invention. In Fig. 1, the reference sign 1 denotes a positive electrode; the reference sign 2 denotes an intermediate layer; the reference sign 3 denotes a solid-electrolyte layer; and the reference sign 4 denotes a negative electrode.

### (1) Formation of positive electrode

A LiCoO₂ layer having a thickness of 5 µm was formed on a surface of a steel use stainless (SUS) 316L substrate having a thickness of 0.5 mm by a pulsed laser deposition (PLD) method. Thus, a positive electrode was prepared.

### (2) Formation of intermediate layers

Three positive electrodes were prepared in this manner. LiNbO₃ layers having a thickness of 0.01 µm were formed on the surfaces of the positive electrodes by the PLD method with LiNbO₃ targets having Li/Nb ratios of 1.0, 1.2, and 1.4; the LiNbO₃ layers were then annealed at 400°C for 0.5 hours; and the resultant intermediate layers were respectively defined as Examples 1, 2, and 3.

### (3) Formation of solid-electrolyte layers

A solid-electrolyte layer composed of Li₂S-P₂S₅ and having a thickness of 10 µm was formed by the PLD method on the surface of each of the intermediate layers of Examples 1 to 3.

### (4) Formation of negative electrodes

A negative electrode composed of Li metal and having a thickness of 1 µm was formed by a vacuum deposition method on the surface of each of the solid-electrolyte layers of Examples 1 to 3. Thus, solid-electrolyte batteries were produced.

### (Comparative examples 1 and 2)

Solid-electrolyte batteries were produced in the same manner as in Examples 1 to 3 except that intermediate layers were formed in the following manner.

### Formation of intermediate layers

Intermediate layers were formed in the same manner as in Examples except that LiNbO₃ targets having Li/Nb ratios of 0.95 and 1.6 were used; the intermediate layers were respectively defined as Comparative examples 1 and 2.

### 2. Evaluations of intermediate layers and solid-electrolyte batteries

### (1) Measurement of Li/Nb ratios of intermediate layers

### i. Measurement method

The Li/Nb ratios of the intermediate layers were measured by inductively coupled plasma (ICP) composition analysis. Specifically, a reference including a thick LiNbO₃ film (having a known Li/Nb) was prepared. The reference, Examples 1 to 3, and Comparative examples 1 and 2 were measured by the ICP composition analysis. The Li/Nb ratios of Examples 1 to 3 and Comparative examples 1 and 2 were determined on the basis of the measurement results obtained by the ICP composition analysis.

### ii. Measurement results

The Li/Nb ratios of Examples 1 to 3, that is, x/y in a chemical formula LiₓNbyO₃-_{z} were respectively 0.93, 0.96, and 0.98 (0 ≤ z ≤ 0.75); x/y of Comparative examples 1 and 2 were respectively 0.91 and 1.00 (z = 0.45 and 0). These Li/Nb ratios (x/y) are described in Table I.

### (2) Evaluation of solid-electrolyte batteries

### i. Evaluation method

### a. Assembly of cells for characteristic evaluation

The produced solid-electrolyte batteries were built in coin-shaped cells to provide cells for characteristic evaluation.

### b. Measurement of internal resistance

A characteristic of the solid-electrolyte batteries was evaluated on the basis of the magnitude of internal resistance. Specifically, a charge-discharge cycle test (temperature: 25°C) was performed in which a cutoff voltage was 3 to 4.2 V and a current density was 0.05 mA/cm²; and the internal resistance of each battery was determined on the basis of a voltage drop for 60 seconds after the initiation of discharge.

### ii. Evaluation results

Evaluation results of Examples 1 to 3 and Comparative examples 1 and 2 are described in Table I.

**[Table I]**

| | **Li/Nb ratio** (x/y) | **Internal resistance** (Ωcm²) |
|---|---|---|
| **Example 1** | 0.93 | 120 |
| **Example 2** | 0.96 | 60 |
| **Example 3** | 0.98 | 100 |
| **Comparative example 1** | 0.91 | 600 |
| **Comparative example 2** | 1.00 | 300 |

Table I indicates that, by making the Li/Nb ratio of LiNbO₃ of an intermediate layer be 0.93 to 0.98, a solid-electrolyte battery having a low internal resistance can be produced.

### [2] Examples in which buffer layers are formed on surfaces of positive-electrode active-material particles

Examples in which a positive-electrode layer is formed of positive-electrode active-material particles having a LiₓNbyO₃-_{z} film serving as a buffer layer and a solid-electrolyte powder, and a solid-electrolyte layer is formed on the surface of the positive-electrode layer will be subsequently described.

### (Examples 4 to 6)

### 1. Production of solid-electrolyte batteries

Solid-electrolyte batteries illustrated in Fig. 2 were produced by a procedure described below. Figure 2 is a schematic view illustrating the sectional configuration of a solid-electrolyte battery according to the present embodiment of the present invention. In Fig. 2, the reference sign 1 denotes a positive electrode; the reference sign 1a denotes a positive-electrode active-material particle; the reference sign 2a denotes a buffer layer; the reference sign 3 denotes a solid-electrolyte layer; and the reference sign 4 denotes a negative electrode.

### (1) Preparation of positive-electrode mixtures

### i. Formation of buffer layers

Ethoxylithium (LiOC₂H₅) and pentaethoxyniobium (Nb(OC₂H₅)₅) were mixed with molar ratios ([LiOC₂H₅]/[Nb(OC₂H₅)₅]) of 0.93, 0.96, and 0.98 and dissolved in ethanol. Each of the resultant solutions was sprayed onto the surfaces of the LiCoO₂ particles 1a having an average size of 10 µm. The LiCoO₂ particles 1a were then left at rest in the air so that ethanol was removed and hydrolysis was caused with moisture in the air. The LiCoO₂ particles 1a were then heated at 300°C for 30 minutes to form, on the surfaces thereof, amorphous LiₓNbyO₃-_{z} films having a thickness of 0.01 µm (10 nm), that is, the buffer layers 2a.

### ii. Preparation of solid-electrolyte powder

A Li₂S powder and a P₂S₅ powder were mixed with a mass ratio of 5:6. The mixture was further ground and mixed with a mortar and the reaction between Li₂S and P₂S₅ was subsequently caused with a planetary ball mill apparatus by a mechanical milling method. The resultant powder was then heated at 210°C for an hour to prepare a crystalline sulfide solid-electrolyte powder composed of Li₂S-P₂S₅.

### iii. Preparation of positive-electrode mixtures

The LiCoO₂ particles having such a LiₓNb_{y}O_{3-z} film and the solid-electrolyte powder were mixed in a weight ratio of 7:3 with a mortar to prepare a positive-electrode mixture.

### (2) Production of solid-electrolyte batteries

### i. Formation of positive-electrode layer and solid-electrolyte layer

A cylindrical resin container having an internal diameter of 10 mm was charged with 10 mg of such a positive-electrode mixture and then 50 mg of the solid-electrolyte powder. The charged materials were compacted with a hydraulic press employing a stainless-steel piston under a pressure of 500 MPa to form a positive-electrode layer and a solid-electrolyte layer.

### ii. Formation of negative electrode

The piston on the solid-electrolyte layer was then withdrawn and an indium (In) foil having a thickness of 300 µm and a lithium (Li) foil having a thickness of 250 µm were placed on the solid-electrolyte layer. The piston was used again to compact the foils under a pressure of 100 MPa to form a negative electrode. Thus, solid-electrolyte batteries were produced.

### (Comparative examples 3 and 4)

Solid-electrolyte batteries were produced in the same manner as in Examples 4 to 6 except that buffer layers were formed in the following manner.

Intermediate layers were formed in the same manner as in Examples 4 to 6 except that LiOC₂H₅ and Nb(OC₂H₅)₅ were mixed with molar ratios ([LiOC₂H₅]/[Nb(OC₂H₅)₅]) of 0.91 and 1.00 and dissolved in ethanol; and the intermediate layers were respectively defined as Comparative examples 3 and 4.

### 2. Evaluations of buffer layers and solid-electrolyte batteries

### (1) Measurement of Li/Nb ratios of buffer layers

The Li/Nb ratios (x/y) of the thus-formed buffer layers 2a were measured by the same measurement method as in Examples 1 to 3. The results indicate that the Li/Nb ratios of Examples 4 to 6 and Comparative examples 3 and 4 were the same as the [LiOC₂H_{5]}/[Nb(OC₂H₅)_{5]} of the corresponding ethanol solutions, 0.93, 0.96, 0.98, 0.91, and 1.00, respectively. These Li/Nb ratios are described in Table II.

### (2) Evaluation of solid-electrolyte batteries

The internal resistance of the batteries was measured and the batteries were evaluated on the basis of the magnitude of the internal resistance.

### i. Measurement method of internal resistance

Each battery was charged with a current density of 0.05 mA/cm2 and a cutoff voltage of 4.2 V and the internal resistance was then measured by a complex impedance method.

### ii. Evaluation results

Evaluation results of Examples 4 to 6 and Comparative examples 3 and 4 are summarized in Table II.

**[Table II]**

| | **Li/Nb ratio** (x/y) | **Internal resistance** (Ωcm²) |
|---|---|---|
| **Example 4** | 0.93 | 300 |
| **Example 5** | 0.96 | 200 |
| **Example 6** | 0.98 | 250 |
| **Comparative example 3** | 0.91 | 1000 |
| **Comparative example 4** | 1.00 | 600 |

Table II indicates that, in the case of forming buffer layers on the surfaces of positive-electrode active-material particles, by making the Li/Nb ratio of LiNbO₃ of the buffer layers be 0.93 to 0.98, a solid-electrolyte battery having a low internal resistance can also be produced.

### Reference Signs List

- 1: positive electrode
- 1a: positive-electrode active-material particle
- 2: intermediate layer
- 2a: buffer layer
- 3: solid-electrolyte layer
- 4: negative electrode

## Claims

1. A solid-electrolyte battery comprising a positive-electrode layer, a negative-electrode layer, and a solid-electrolyte layer that conducts lithium ions between the electrode layers, wherein
a buffer layer that is a LiNbO₃ film is disposed between a positive-electrode active material and a solid electrolyte, and
a composition ratio (Li/Nb) of Li to Nb in the LiNbO₃ film satisfies 0.93 ≤ Li/Nb ≤ 0.98.

2. The solid-electrolyte battery according to Claim 1, wherein the buffer layer is disposed between the positive-electrode layer and the solid-electrolyte layer.

3. The solid-electrolyte battery according to Claim 1, wherein the buffer layer is disposed on a surface of a particle of the positive-electrode active material.

4. The solid-electrolyte battery according to any one of Claims 1 to 3, wherein the buffer layer has a thickness of 2 nm to 1 µm.
